# EUROPEAN PATENT SPECIFICATION

(11) **EP 3 109 119 B1**
(45) Date of publication and mention of the grant of the patent: **10.08.2022**
(21) Application number: 15173381.3
(22) Date of filing: 23.06.2015
(51) Int. Cl.: B60W 50/14, B60K 28/06, B60W 50/02, B60K 28/10, G05D 1/00

(54) **METHOD AND ARRANGEMENT FOR ALLOWING SECONDARY TASKS DURING SEMI-AUTOMATED DRIVING**
VERFAHREN UND ANORDNUNG ZUR ERMÖGLICHUNG VON SEKUNDÄREN AUFGABEN BEIM HALBAUTOMATISCHEN FAHREN
PROCÉDÉ ET AGENCEMENT PERMETTANT DES TÂCHES SECONDAIRES PENDANT UNE CONDUITE SEMI-AUTOMATIQUE

(43) Date of publication of application: 28.12.2016
(73) Proprietor: Volvo Car Corporation, 40531 Göteborg (SE)
(72) Inventor: Coelingh, Erik, 44695 Älvängen (SE); Ekmark, Jonas, 42470 Olofstorp (SE)
(74) Representative: Kransell & Wennborg KB

(56) References cited:
- EP-A1- 2 314 489
- EP-A1- 2 314 490
- EP-A2- 2 392 501
- WO-A1-2015/070977
- DE-A1-102012 112 802
- US-B1- 6 226 570

## Description

### Technical field

Embodiments herein relate to a method and an arrangement for allowing secondary tasks during semi-automated driving of a road vehicle having an infotainment system which comprises one or more infotainment display units arranged in a passenger compartment thereof, and a semi-automated driver assist system comprising one or more sensors for acquiring data of a road ahead, as well as a road vehicle that comprises such an arrangement.

### Background

Motor vehicles are increasingly being equipped with sensors which monitor the surrounding environment. This sensor information may be used to control the future trajectory of the road vehicle. This automation may range from a fully autonomous vehicle, where vehicle sensors monitor all feasible situations in the vehicle surroundings allowing for vehicle travel without driver supervision, to a driver controlled vehicle, where the sensor information is only used to inform the driver. In all levels of automation there is a need for safe driving, meaning in this case to plan and realize a vehicle trajectory with an acceptably low level of risk.

In a case where the automated function takes responsibility for a particular driving task, the automation system must be able to operate with a sufficiently low level of risk. This is the purpose of functional safety. This is challenging when the automation system uses sensors which have inherent limitations, e.g. cannot detect everything in the environment of the vehicle. This is why most automated functions rely on the fact that the driver of the vehicle is always responsible for safe operation of the vehicle and that the driver of the vehicle at any moment may regain control of the vehicle. Thus, in a situation where it is not possible to account for all feasible situations, the vehicle driver will have to at least monitor a semi-autonomous control, with a readiness to assume control of the vehicle.

A previously known document, DE102009046451, relates to a method, apparatus and computer program product that involve receiving face data via a camera interface, where the data represents a viewing direction of an occupant of a motor vehicle. The face data is classified, where verification takes place to check whether the viewing direction of the occupant is directed to an assembly area of an infotainment device during classification. A vision attention signal is output via a signal interface when the viewing direction of the occupant is directed to the assembly area of the infotainment device, so as to detect vision attention to the assembly area of the infotainment device. The information thus obtained can, for example, be used to adapt a warning strategy of a driver assistance system, since the driver is distracted when looking at the infotainment system. It may in such a case issue a Lane Departure Warning or turn on Lane Keeping Support or adjust the time gap of an ACC system, rendering improved safety and comfort.

Document DE102009046451, is based on the conception that the driver is distracted when looking at the infotainment system, and uses such detection of distraction for initiating a driver warning or driver assistance in order to mitigate any danger potentially caused by the driver distraction.

Thus, document DE102009046451 relates to the provision of countermeasures to potential dangers caused by driver distraction from a vehicle infotainment system, however it nowhere mentions how to facilitate driver usage of an an-board infotainment system.

EP 2 392 501 discloses a method involving setting alertness potential on a starting value depending on an actuation of a control element by a driver. The alertness potential is reduced with a setting velocity. The setting velocity is determined under consideration of the actual data of a sensor or other vehicle system. An independent claim is also included for a motor vehicle with a controller.

US 6,226,570 discloses a motor vehicle having devices for temporary automatic vehicle driving and devices for the communication between a vehicle user and at least one electronic communication system. An operating device is provided by which the communication devices can be activated for implementing a communication operation and the vehicle driving devices can be activated for an automatic vehicle driving. When it is recognized that resumption of manual vehicle driving is becoming necessary, the activated vehicle driving devices transmit a take-over information signal to the communication devices, which display this take-over information on a display unit.

DE 10 2012 112802 discloses that a warning signal as a takeover prompt is output to a driver by a hazard warning device, to control a driver assistance system during an autonomous or semi-autonomous driving. The takeover probability is determined by a risk estimator, based on environment data and vehicle dynamics data of vehicle during autonomous or semi-autonomous driving. The driver's attention level is estimated by an attention estimation unit. The period of time for the generation of the warning signal is determined from the transfer probability as a function of the driver's attention level.

EP 2 314 490 discloses a method involving transferring a motor vehicle from a takeover condition to a safe condition. The driving interference or a request for driver assumption determines plan of action, which contains temporal operational sequence of control commands of vehicle systems.

### Summary

The invention aims to provide an improved method for allowing secondary tasks during semi-automated driving of a road vehicle having an infotainment system which comprises one or more infotainment display units arranged in a passenger compartment thereof, and a semi-automated driver assist system comprising one or more sensors for acquiring data of a road ahead.

This is provided through a method according to independent claim 1.

The method, as above, provides for allowing a driver of an associated road vehicle to, in a safe manner, perform secondary tasks, using an infotainment system controlled by vehicle, whilst being able to instantaneously bring the driver back into the control-loop should it be deemed necessary.

Preferably the method further comprises discontinuing or fading-out any ongoing presentation on the infotainment display unit of the infotainment system of the road vehicle viewed by the driver upon urging the driver of the road vehicle to assume control of the road vehicle.

The provision of discontinuing or fading-out any ongoing presentation on the infotainment display unit will further contribute to returning the attention of a road vehicle driver to the task of driving.

Preferably the method further comprises that if the viewing direction of the driver of the road vehicle is determined to not be towards the road ahead or towards an infotainment display unit of the infotainment system of the road vehicle, but on a nomadic device or item, than cancelling any ongoing autonomous control by the semi-automated driver assist system and urging the driver to assume control of the road vehicle.

The provision of cancelling any ongoing autonomous control by the semi-automated driver assist system and urging the driver to assume control of the road vehicle if the viewing direction of the driver determined to be towards a nomadic device or item provides for improved traffic safety through preventing that a vehicle driver loses himself/herself using a smartphone, tablet PC or similar portable infotainment device, and therefore neglects the responsibilities associated with driving the vehicle.

Preferably the method further comprises determining a fault status of the semi-automated driver assist system and if determined faulty, discontinuing or fading-out any ongoing presentation on the infotainment display unit of the infotainment system of the road vehicle viewed by the driver and urging the driver of the road vehicle to assume control of the road vehicle.

The provision of discontinuing or fading-out any ongoing presentation on the infotainment display unit viewed by the driver and urging the driver of the road vehicle to assume control if the semi-automated driver assist system is determined faulty further improve traffic safety through eliminating further travel control by a faulty system.

Preferably the method further comprises determining a delay in the driver of the road vehicle to assuming control of the road vehicle following the driver of the road vehicle being urged to assume control of the road vehicle, and if the determined delay exceeds a predetermined delay threshold, causing the semi-automated driver assist system to go to a degraded mode and slow down the road vehicle autonomously.

The provision of slowing down the road vehicle autonomously should a driver not respond immediately to a request to take over the task of driving also further improve traffic safety through restricting further travel.

Preferably, the delay in the driver of the road vehicle assuming control of the road vehicle is determined from a delay in the viewing direction of the driver of the road vehicle being determined to be towards the road ahead following the driver of the road vehicle being urged to assume control of the road vehicle.

The provision of determining the delay from a delay in the viewing direction of the driver of the road vehicle being determined to be towards the road ahead following a request to take over the task of driving provides an efficient way of determining the delay.

Preferably the method further comprises that urging the driver of the road vehicle to assume control of the road vehicle comprises at least one of: presenting a takeover request to the infotainment display unit of the infotainment system of the road vehicle viewed by the driver; presenting a blackout screen to the infotainment display unit of the infotainment system of the road vehicle viewed by the driver; presenting an acoustic takeover request to an acoustic presentation unit of the road vehicle; presenting a haptic takeover request warning to a road vehicle driver contact surface of the road vehicle.

The provision of presenting a takeover request in one or more of the above ways contributes to further enhancing driver awareness and stress the urgency of a takeover.

The invention aims to provide an improved arrangement for allowing secondary tasks during semi-automated driving of a road vehicle having an infotainment system which comprises one or more infotainment display units arranged in a passenger compartment thereof, and a semi-automated driver assist system comprising one or more sensors for acquiring data of a road ahead.

This is provided though an arrangement according to independent claim 8.

The arrangement, as above, provides for allowing a driver of an associated road vehicle to, in a safe manner, perform secondary tasks, using an infotainment system controlled by the vehicle, whilst being able to instantaneously bring the driver back into the control-loop should it be deemed necessary.

Preferably the control unit further is arranged to discontinue or fade-out any ongoing presentation on the infotainment display unit of the infotainment system of the road vehicle viewed by the driver upon urging the driver of the road vehicle to assume control of the road vehicle.

The provision of the control unit further being arranged to discontinue or fade-out any ongoing presentation on the infotainment display unit will further contribute to returning the attention of a road vehicle driver to the task of driving.

Preferably the control unit further is arranged to cancel any ongoing autonomous control by the semi-automated driver assist system and urge the driver to assume control of the road vehicle if the viewing direction of the driver of the road vehicle is determined to not be towards the road ahead or towards an infotainment display unit of the infotainment system of the road vehicle, but on a nomadic device or item.

The provision of having the control unit cancel any ongoing autonomous control by the semi-automated driver assist system and urging the driver to assume control of the road vehicle if the viewing direction of the driver determined to be towards a nomadic device or item provides for improved traffic safety through preventing that a vehicle driver loses himself/herself using a smartphone, tablet PC or similar portable infotainment device, and therefore neglects the responsibilities associated with driving the vehicle.

Preferably the control unit further is arranged to determine a fault status of the semi-automated driver assist system, and if determined faulty discontinue or fade-out any ongoing presentation on the infotainment display unit of the infotainment system of the road vehicle viewed by the driver and urge the driver of the road vehicle to assume control of the road vehicle.

The provision of arranging the control unit to discontinue or fade-out any ongoing presentation on the infotainment display unit viewed by the driver and urging the driver of the road vehicle to assume control if the semi-automated driver assist system is determined faulty further improve traffic safety through eliminating further travel control by a faulty system.

Preferably the control unit further is arranged to determine a delay in the driver of the road vehicle assuming control of the road vehicle following the driver of the road vehicle being urged to assume control of the road vehicle, and if the determined delay exceeds a predetermined delay threshold, cause the semi-automated driver assist system to go to a degraded mode and slow down the road vehicle autonomously.

The provision of arranging the control unit to slow down the road vehicle autonomously should a driver not respond immediately to a request to take over the task of driving also further improve traffic safety through restricting further travel.

Preferably the control unit further is arranged to determine the delay in the driver of the road vehicle assuming control of the road vehicle from a delay in the viewing direction of the driver of the road vehicle being determined to be towards the road ahead following the driver of the road vehicle being urged to assume control of the road vehicle.

The provision of arranging the control unit to determine the delay from a delay in the viewing direction of the driver of the road vehicle being determined to be towards the road ahead following a request to take over the task of driving provides an efficient way of determining the delay.

Preferably the control unit further is arranged to urge the driver of the road vehicle to assume control of the road vehicle by at least one of: presenting a takeover request to the infotainment display unit of the infotainment system of the road vehicle viewed by the driver; presenting a blackout screen to the infotainment display unit of the infotainment system of the road vehicle viewed by the driver; presenting an acoustic takeover request to an acoustic presentation unit of the road vehicle; presenting a haptic takeover request warning to a road vehicle driver contact surface of the road vehicle.

The provision of arranging the control unit to present a takeover request in one or more of the above ways contributes to further enhancing driver awareness and stress the urgency of a takeover.

According to a final aspect is provided a road vehicle which comprises an arrangement as above.

A vehicle which comprises an arrangement as above is able to allow a driver thereof to, in a safe manner, perform secondary tasks, using an infotainment system controlled by the road vehicle, whilst being able to instantaneously bring the driver back into the control-loop should it be deemed necessary.

### Brief description of the drawings

In the following, embodiments herein will be described in greater detail by way of example only with reference to attached drawings, in which
Fig. 1 is a schematic illustration of a method for allowing secondary tasks during semi-automated driving according to embodiments herein.
Fig. 2 is a schematic illustration of a road vehicle comprising an arrangement for allowing secondary tasks during semi-automated driving according to embodiments herein.
Fig. 3 is a schematic illustration of the passenger compartment of a road vehicle comprising an arrangement for allowing secondary tasks during semi-automated driving according to embodiments herein.

Still other objects and features of embodiments herein will become apparent from the following detailed description considered in conjunction with the accompanying drawings. It is to be understood, however, that the drawings are designed solely for purposes of illustration and not as a definition of the limits hereof, for which reference should be made to the appended claims. It should be further understood that the drawings are not necessarily drawn to scale and that, unless otherwise indicated, they are merely intended to conceptually illustrate the structures and procedures described herein.

### Description of embodiments

In overview embodiments herein relate to a method and an arrangement for allowing secondary tasks during semi-automated driving of a road vehicle 1 having an infotainment system 2 which comprises one or more infotainment display units 3 arranged in a passenger compartment 4 thereof, and a semi-automated driver assist system 5 comprising one or more sensors 6 for acquiring data of a road ahead, as well as a road vehicle 1 that comprises such an arrangement.

Highly-automated road vehicles 1 allow drivers to spend time on secondary tasks such as reading or surfing the internet. However, this requires extensive redundancy in terms of sensing, computing and actuation in order to allow this in a safe way. Semi-automated driver assist systems 5, such as e.g. Pilot Assist and Traffic Jam Assist, do normally not have this redundancy but require the road vehicle 1 driver to be in the loop all the time, i.e. normally a semi-automated driver assist system 5 will assist in driving the road vehicle 1 during continuous supervision by the road vehicle 1 driver. Hence, there has earlier been no room for allowing secondary tasks. However, it is herein envisaged to allow a road vehicle 1 driver to perform other tasks whilst behind the steering wheel, this in particular as it is desirable to allow a road vehicle 1 driver to perform other tasks while behind the steering wheel of the road vehicle 1, without incurring the full cost of an extensively redundant automatic system.

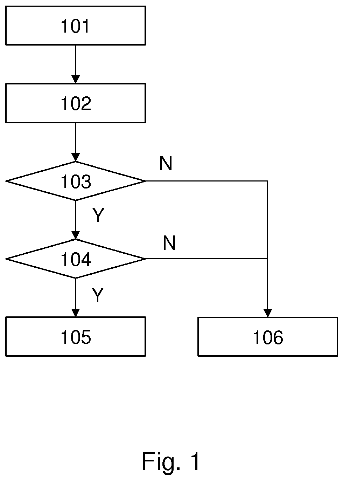

Firstly described herein is a method, as illustrated schematically in fig. 1, that allows for limited secondary tasks, without requiring extensive redundancy. A basic principle is to provide a robust semi-automated driver assist system 5, such as e.g. Pilot Assist or Traffic Jam Assist, and allow the road vehicle 1 driver to use an in-vehicle infotainment system 2 display unit 3 while the semi-automated driver assist system 5 is sufficiently confident that the driver does not have to intervene in the control of the road vehicle 1, i.e. allowing the semi-automated driver assist system 5 to control the road vehicle 1 autonomously. Examples of such in-vehicle infotainment system 2 display units 3 include, but are not limited to, a Driver Information Module (DIM), Head Up Display (HUD) or Center Stack Display.

Increased robustness can e.g. be achieved by introducing additional sensors 6 and/or map data such that the semi-automated driver assist system 5 can deal with most traffic scenarios. Thus, in some embodiments the road vehicle 1 will be provided with the same or similar array of sensors 6 as a fully-automated road vehicle but will lack the extensive redundancy required in other road vehicle systems, e.g. brakes, thus enabling the same or an even higher confidence level by the semi-automatic system but at a lower cost than that for a fully-automated road vehicle.

Accordingly, as illustrated in fig. 1, is provided a method for allowing secondary tasks during semi-automated driving of a road vehicle 1 having an infotainment system 2 which comprises one or more infotainment display units 3 arranged in a passenger compartment 4 thereof, and a semi-automated driver assist system 5 comprising one or more sensors 6 for acquiring data of a road ahead. The method comprises the steps of: 101 determining, from at least the acquired data of the road ahead, a confidence of the ability of the semi-automated driver assist system 5 to control the road vehicle 1 autonomously; 102 determining a viewing direction of a driver of the road vehicle 1 using a driver monitoring camera 7; and 103 if the viewing direction of the driver of the road vehicle 1 is determined to be towards an infotainment display unit 3 of the infotainment system 2 of the road vehicle 1 (indicated by Y in fig. 1) and 104 the confidence of the ability of the semi-automated driver assist system 5 to control the road vehicle 1 autonomously is determined to be above a confidence threshold (indicated by Y in fig. 1), 105 allowing autonomous control of the road vehicle 1 by the semi-automated driver assist system 5; and if, during ongoing autonomous control by the semi-automated driver assist system 5, 103 the viewing direction of the driver of the road vehicle 1 is determined not to be towards an infotainment display unit 3 of the infotainment system 2 of the road vehicle 1 and not to be towards the road ahead (indicated by N in fig. 1) or 104 the confidence of the ability of the semi-automated driver assist system 5 to control the road vehicle 1 autonomously is determined to be below a confidence threshold (indicated by N in fig. 1), 106 cancelling the ongoing autonomous control by the semi-automated driver assist system 5 and urging the driver of the road vehicle 1 to assume control of the road vehicle 1.

Sensors 6 will determine if the road is clear and the driver monitoring camera 7 tracks whether the driver of the road vehicle 1 is using the in-vehicle infotainment system 2 for secondary tasks, such as e.g. reading, surfing etc.. If this is determined with a sufficiently high confidence, the semi-automated driver assist system 5 will temporarily assume full control of the road vehicle 1. However, as soon as the confidence of the semi-automated driver assist system 5 drops below a certain threshold level, a warning and/or handover request urging the driver of the road vehicle 1 to assume control of the road vehicle 1 will be issued to the driver. Thus, as long as the eyes of the driver of the road vehicle 1 are directed towards an infotainment display unit 3 of the infotainment system 2, and the semi-automated driver assist system 5 is sufficiently confident, the driver can continue with the secondary task.

If the semi-automated driver assist system 5 has low confidence that it can continue controlling the road vehicle 1 autonomously, the in-vehicle infotainment will switch off and the driver is urged to take over immediately. Thus, in some embodiments the method further comprises discontinuing or fading-out any ongoing presentation on the infotainment display unit 3 of the infotainment system 2 of the road vehicle 1 viewed by the driver upon urging the driver of the road vehicle 1 to assume control of the road vehicle 1. Moreover, any ongoing presentation may be discontinued or faded-out on further infotainment display units 3 than the one viewed by the driver, possibly all infotainment display units 3 of the infotainment system 2 of the road vehicle 1.

For traffic safety it is not desirable that the road vehicle 1 driver loses himself/herself using a smartphone, tablet PC or similar portable infotainment device, and therefore neglects the responsibilities associated with driving the road vehicle 1. However, in accordance with the teachings herein, under certain circumstances the driver may be allowed performance of the same tasks using an infotainment system 2 controlled by the road vehicle 1. Therefore, if the driver does not look at the infotainment system 2 or not on the road, but e.g. on a nomadic device or item such as a smartphone, tablet PC or similar portable infotainment device or another portable device or item not controlled by the road vehicle 1, e.g. a book, a food item, a paper map, a shaver or similar, than any ongoing autonomous control by the semi-automated driver assist system 5 will be cancelled and the driver urged to take over. Thus, in yet some embodiments of the method, if the viewing direction of the driver of the road vehicle 1 is determined to not be towards the road ahead or towards an infotainment display unit 3 of the infotainment system 2 of the road vehicle 1, but on a nomadic device or item 8, than cancelling any ongoing autonomous control by the semi-automated driver assist system 5 and urging the driver to assume control of the road vehicle 1.

Should a system-error or fault occur during control of the road vehicle 1 by the semi-automated driver assist system 5 the in-vehicle infotainment is switched off and the driver is urged to take over immediately, in the same way as when the confidence of the system drops under the threshold level. Thus, according to still further embodiments the method further comprises determining a fault status of the semi-automated driver assist system 5 and if determined faulty, discontinuing or fading-out any ongoing presentation on the infotainment display unit 3 of the infotainment system 2 of the road vehicle 1 viewed by the driver and urging the driver of the road vehicle 1 to assume control of the road vehicle 1. Moreover, any ongoing presentation may be discontinued or faded-out on further infotainment display units 3 than the one viewed by the driver, possibly all infotainment display units 3 of the infotainment system 2 of the road vehicle 1.

If the driver does not take over immediately when urged to do so the semi-automated driver assist system 5 will go to a degraded mode and slow down the road vehicle 1 in a safe way, e.g. through throttling down a propulsion unit of the road vehicle 1 and possibly also by performing an autonomous braking action. Thus, in yet some embodiments the method further comprises determining a delay in the driver of the road vehicle 1 to assuming control of the road vehicle 1 following the driver of the road vehicle 1 being urged to assume control of the road vehicle 1, and if the determined delay exceeds a predetermined delay threshold, causing the semi-automated driver assist system 5 to go to a degraded mode and slow down the road vehicle 1 autonomously.

In some embodiments the delay in the driver of the road vehicle 1 assuming control of the road vehicle 1 is determined from a delay in the viewing direction of the driver of the road vehicle 1 being determined to be towards the road ahead following the driver of the road vehicle 1 being urged to assume control of the road vehicle 1. Thus, should the eyes of the road vehicle 1 driver be determined not to be on the road following the driver of the road vehicle 1 being urged to assume control of the road vehicle 1, the semi-automated driver assist system 5 will throttle down the propulsion unit of the road vehicle 1 and possibly also perform an autonomous braking action. Thus, the road vehicle 1 will clearly indicate that the driver has violated the agreement and that it was forced to abort the automated driving task.

According to embodiments of the method, in order to further enhance driver awareness and stress urgency, urging the driver of the road vehicle 1 to assume control of the road vehicle 1 comprises at least one of: presenting a takeover request to the infotainment display unit 3 of the infotainment system 2 of the road vehicle 1 viewed by the driver; presenting a blackout screen to the infotainment display unit 3 of the infotainment system 2 of the road vehicle 1 viewed by the driver; presenting an acoustic takeover request to an acoustic presentation unit 9 of the road vehicle 1; presenting a haptic takeover request warning to a road vehicle 1 driver contact surface 10 of the road vehicle 1. The takeover request can, of course, be presented in two or more of the above ways, in order to further enhance the ability of the driver to perceive the takeover request.

Thus, according to some embodiments the takeover request is provided through a message presented on the infotainment display unit 3 of the infotainment system 2 of the road vehicle 1 viewed by the driver, and in some embodiments the takeover request is provided through simply blacking-out the infotainment display unit, fully or partially, thus indicating to the road vehicle 1 driver that his/her focus should be returned to the task of driving the road vehicle 1. A partial black-out may be performed such that only information that is required for the task of driving the road vehicle 1 is retained on the infotainment display unit 3 whilst all other information is blacked-out. The takeover request can, when presented acoustically, be presented by an acoustic presentation unit 9 of the road vehicle 1, such as one or more loudspeakers of the in-vehicle infotainment system 2 or one or more acoustic presentation unit 9s separate therefrom, e.g. a designated acoustic presentation unit 9. When presented haptically, the takeover request can be presented e.g. through vibrating a road vehicle 1 driver contact surface 10 of the road vehicle 1, such as e.g. a steering wheel, a brake or accelerator pedal, one or more support surfaces of a road vehicle 1 driver seat etc..

The method described herein ensures that a driver can only execute a limited set of secondary tasks, while the driver can immediately be notified that he/she has to take over.

As long as the eyes of the road vehicle 1 driver are focused on a display unit 3 of the road vehicle 1 controlled infotainment system 2 such a secondary task may momentarily be allowed while driving. This is made possible as the driver effectively and instantaneously can be warned and urged to return his/her focus to the task of driving should the confidence of the semi-automated driver assist system 5 drop below the threshold level. Immediate notification ability is ensured as the eyes of the driver are already on a display unit 3 of the infotainment system 2. Thus, that display unit 3 of the infotainment system 2 is suitable to be used to urge the driver of the road vehicle 1 to assume control.

Thus, the semi-automated driver assist system 5 will drive the road vehicle 1 as long as the driver uses an infotainment display unit 3 controlled by the in-vehicle infotainment system 2, and therefore, by which the driver instantly can be urged back to the task of driving the road vehicle 1.

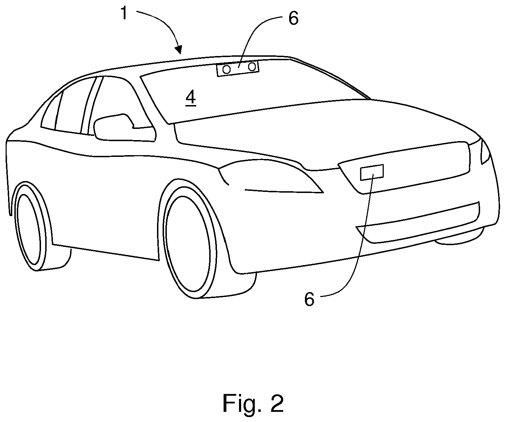

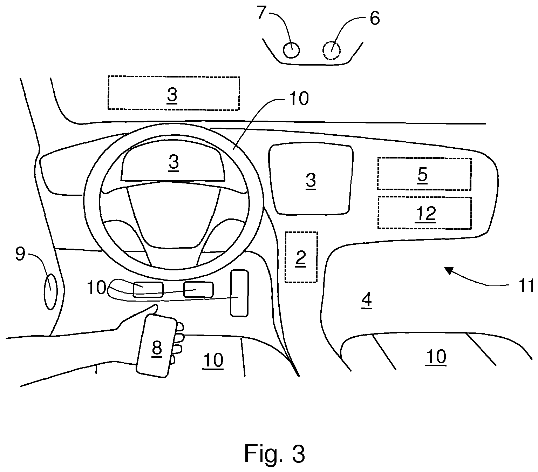

In accordance with the present disclosure is also envisaged an arrangement 11 for allowing secondary tasks during semi-automated driving of a road vehicle 1, as illustrated schematically in fig. 2, having an infotainment system 2 which comprises one or more infotainment display units 3 arranged in a passenger compartment 4 thereof, and a semi-automated driver assist system 5 comprising one or more sensors 6 for acquiring data of a road ahead. A passenger compartment 4 of a road vehicle 1 comprising such an arrangement 11 is illustrated in fig. 3.

The arrangement 11 comprises: a control unit 12 arranged to determine, from at least the acquired data of the road ahead, a confidence of the ability of the semi-automated driver assist system 5 to control the road vehicle 1 autonomously; a driver monitoring camera 7 for determining a viewing direction of a driver of the road vehicle 1; the control unit 12 further being arranged to allow autonomous control of the road vehicle 1 by the semi-automated driver assist system 5 if the viewing direction of the driver of the road vehicle 1 is determined to be towards an infotainment display unit 3 of the infotainment system 2 of the road vehicle 1 and the confidence of the ability of the semi-automated driver assist system 5 to control the road vehicle 1 autonomously is determined to be above a confidence threshold; and cancel the ongoing autonomous control by the semi-automated driver assist system 5 and urge the driver of the road vehicle 1 to assume control of the road vehicle 1 if, during ongoing autonomous control by the semi-automated driver assist system 5, the viewing direction of the driver of the road vehicle 1 is determined not to be towards an infotainment display unit 3 of the infotainment system 2 of the road vehicle 1 and not to be towards the road ahead or the confidence of the ability of the semi-automated driver assist system 5 to control the road vehicle 1 autonomously is determined to be below a confidence threshold.

If the semi-automated driver assist system 5 has low confidence that it can continue controlling the road vehicle 1 autonomously, the in-vehicle infotainment will switch off and the driver is urged to take over immediately. Thus, in some embodiments the control unit 12 is further arranged to discontinue or fade-out any ongoing presentation on the infotainment display unit 3 of the infotainment system 2 of the road vehicle 1 viewed by the driver upon urging the driver of the road vehicle 1 to assume control of the road vehicle 1. Moreover, any ongoing presentation may be discontinued or faded-out on further infotainment display units 3 than the one viewed by the driver, possibly all infotainment display units 3 of the infotainment system 2 of the road vehicle 1.

For traffic safety it is not desirable that the road vehicle 1 driver loses himself/herself using a smartphone, tablet PC or similar portable infotainment device, and therefore neglects the responsibilities associated with driving the road vehicle 1. However, in accordance with the teachings herein, under certain circumstances it may be possible to allow the driver performance of the same tasks using an infotainment system 2 controlled by the road vehicle 1. Therefore, if the driver does not look at the infotainment system 2 or not on the road, but e.g. on a nomadic device or item such as a smartphone, tablet PC or similar portable infotainment device or another portable device or item not controlled by the road vehicle 1, e.g. a book, a food item, a paper map, a shaver or similar, than any ongoing autonomous control by the semi-automated driver assist system 5 should be cancelled and the driver urged to take over. Thus, in yet some embodiments the control unit 12 is further arranged to cancel any ongoing autonomous control by the semi-automated driver assist system 5 and urge the driver to assume control of the road vehicle 1 if the viewing direction of the driver of the road vehicle 1 is determined to not be towards the road ahead or towards an infotainment display unit 3 of the infotainment system 2 of the road vehicle 1, but on a nomadic device or item 8.

Should a system-error or fault occur during control of the road vehicle 1 by the semi-automated driver assist system 5 the in-vehicle infotainment should be switched off and the driver urged to take over immediately, in the same way as when the confidence of the system drops under the threshold level. Thus, according to still further embodiments the control unit 12 is further arranged to determine a fault status of the semi-automated driver assist system 5, and if determined faulty discontinue or fade-out any ongoing presentation on the infotainment display unit 3 of the infotainment system 2 of the road vehicle 1 viewed by the driver and urge the driver of the road vehicle 1 to assume control of the road vehicle 1. Moreover, the control unit 12 may further be arranged to discontinue or fade-out any ongoing presentation on further infotainment display units 3 than the one viewed by the driver, possibly all infotainment display units 3 of the infotainment system 2 of the road vehicle 1.

If the driver does not take over immediately when urged to do so the semi-automated driver assist system 5 should go to a degraded mode and slow down the road vehicle 1 in a safe way, e.g. through throttling down a propulsion unit of the road vehicle 1 and possibly also by performing an autonomous braking action. Thus, in yet some embodiments the control unit 12 is further arranged to determine a delay in the driver of the road vehicle 1 assuming control of the road vehicle 1 following the driver of the road vehicle 1 being urged to assume control of the road vehicle 1, and if the determined delay exceeds a predetermined delay threshold, cause the semi-automated driver assist system 5 to go to a degraded mode and slow down the road vehicle 1 autonomously.

In some embodiments the control unit 12 is further arranged to determine the delay in the driver of the road vehicle 1 assuming control of the road vehicle 1 from a delay in the viewing direction of the driver of the road vehicle 1 being determined to be towards the road ahead following the driver of the road vehicle 1 being urged to assume control of the road vehicle 1. Thus, should the eyes of the road vehicle 1 driver be determined not to be on the road following the driver of the road vehicle 1 being urged to assume control of the road vehicle 1, the control unit 12 should cause the semi-automated driver assist system 5 to throttle down the propulsion unit of the road vehicle 1 and possibly also perform an autonomous braking action. In this way the road vehicle 1 will clearly indicate that the driver has violated the agreement and that it was forced to abort the automated driving task.

According to some embodiments, in order to further enhance driver awareness and stress urgency, the control unit 12 is further arranged to urge the driver of the road vehicle 1 to assume control of the road vehicle 1 by at least one of: presenting a takeover request to the infotainment display unit 3 of the infotainment system 2 of the road vehicle 1 viewed by the driver; presenting a blackout screen to the infotainment display unit 3 of the infotainment system 2 of the road vehicle 1 viewed by the driver; presenting an acoustic takeover request to an acoustic presentation unit 9 of the road vehicle 1; presenting a haptic takeover request warning to a road vehicle 1 driver contact surface 10 of the road vehicle 1. The takeover request can, of course, be presented in two or more of the above ways, in order to further enhance the ability of the driver to perceive the takeover request.

Thus, according to some embodiments the control unit 12 is further arranged to provide the takeover request through a message presented on the infotainment display unit 3 of the infotainment system 2 of the road vehicle 1 viewed by the driver, and in some embodiments the control unit 12 is further arranged to provide the takeover request through simply blacking-out the infotainment display unit, fully or partially, thus indicating to the road vehicle 1 driver that his/her focus should be returned to the task of driving the road vehicle 1. A partial black-out may be performed such that only information that is required for the task of driving the road vehicle 1 is retained on the infotainment display unit 3 whilst all other information is blacked-out. The takeover request can, when being caused by the control unit 12 further to be presented acoustically, be arranged to be presented by an acoustic presentation unit 9 of the road vehicle 1, such as one or more loudspeakers of the in-vehicle infotainment system 2 or one or more acoustic presentation units 9 separate therefrom, e.g. a designated acoustic presentation unit 9. When being caused by the control unit 12 further to be presented haptically, the takeover request can be presented e.g. through vibrating a road vehicle 1 driver contact surface 10 of the road vehicle 1, such as e.g. a steering wheel, a brake or accelerator pedal, one or more support surfaces of a road vehicle 1 driver seat etc..

The method and arrangement 11 described herein strive to encourage a suitable behavior of the driver and eliminate any unsuitable behavior by allowing secondary tasks performed in a safe manner where the road vehicle 1 is able to instantaneously bring the driver back into the control-loop should it be deemed necessary.

In accordance with the present disclosure is also envisaged a road vehicle 1, comprising an arrangement 11 as described in the foregoing.

A road vehicle 1 which comprises an arrangement 11, as above, will allow a driver the performance of limited secondary tasks, using an infotainment system 2 controlled by the road vehicle 1, while ensuring that the driver can immediately be notified that he/she has to take over the task of driving the road vehicle 1.

The above-described embodiments may be varied within the scope of the following claims.

## Claims

1. A method for allowing secondary tasks during semi-automated driving of a road vehicle (1) having an infotainment system (2) which comprises one or more infotainment display units (3) arranged in a passenger compartment (4) thereof, and a semi-automated driver assist system (5) comprising one or more sensors (6) for acquiring data of a road ahead;
**characterized in that** it comprises the steps of:
(101) determining, from at least the acquired data of the road ahead, a confidence of the ability of the semi-automated driver assist system (5) to control the road vehicle (1) autonomously;
(102) determining a viewing direction of a driver of the road vehicle (1) using a driver monitoring camera (7);
(103) if the viewing direction of the driver of the road vehicle (1) is determined to be towards an infotainment display unit (3) of the infotainment system (2) of the road vehicle (1) and (104) the confidence of the ability of the semi-automated driver assist system (5) to control the road vehicle (1) autonomously is determined to be above a confidence threshold, (105) allowing autonomous control of the road vehicle (1) by the semi-automated driver assist system (5);
if, during ongoing autonomous control by the semi-automated driver assist system (5), (103) the viewing direction of the driver of the road vehicle (1) is determined not to be towards an infotainment display unit (3) of the infotainment system (2) of the road vehicle (1) and not to be towards the road ahead or (104) the confidence of the ability of the semi-automated driver assist system (5) to control the road vehicle (1) autonomously is determined to be below a confidence threshold, (106) cancelling the ongoing autonomous control by the semi-automated driver assist system (5) and urging the driver of the road vehicle (1) to assume control of the road vehicle (1).

2. A method according to claim 1, **wherein** it further comprises discontinuing or fading-out any ongoing presentation on the infotainment display unit (3) of the infotainment system (2) of the road vehicle (1) viewed by the driver upon urging the driver of the road vehicle (1) to assume control of the road vehicle (1).

3. A method according to claim 1 or 2, **wherein** if the viewing direction of the driver of the road vehicle (1) is determined to not be towards the road ahead or towards an infotainment display unit (3) of the infotainment system (2) of the road vehicle (1), but on a nomadic device or item (8), than cancelling any ongoing autonomous control by the semi-automated driver assist system (5) and urging the driver to assume control of the road vehicle (1).

4. A method according to any one of claims 1 to 3, **wherein** it further comprises determining a fault status of the semi-automated driver assist system (5) and if determined faulty, discontinuing or fading-out any ongoing presentation on the infotainment display unit (3) of the infotainment system (2) of the road vehicle (1) viewed by the driver and urging the driver of the road vehicle (1) to assume control of the road vehicle (1).

5. A method according to any one of claims 1 to 4, **wherein** it further comprises determining a delay in the driver of the road vehicle (1) to assuming control of the road vehicle (1) following the driver of the road vehicle (1) being urged to assume control of the road vehicle (1), and if the determined delay exceeds a predetermined delay threshold, causing the semi-automated driver assist system (5) to go to a degraded mode and slow down the road vehicle (1) autonomously.

6. A method according to claim 5, **wherein** the delay in the driver of the road vehicle (1) assuming control of the road vehicle (1) is determined from a delay in the viewing direction of the driver of the road vehicle (1) being determined to be towards the road ahead following the driver of the road vehicle (1) being urged to assume control of the road vehicle (1).

7. A method according to any one of claims 1 to 6, **wherein** urging the driver of the road vehicle (1) to assume control of the road vehicle (1) comprises at least one of:
presenting a takeover request to the infotainment display unit (3) of the infotainment system (2) of the road vehicle (1) viewed by the driver; presenting a blackout screen to the infotainment display unit (3) of the infotainment system (2) of the road vehicle (1) viewed by the driver; presenting an acoustic takeover request to an acoustic presentation unit (9) of the road vehicle (1); presenting a haptic takeover request warning to a road vehicle (1) driver contact surface (10) of the road vehicle (1).

8. An arrangement (11) for allowing secondary tasks during semi-automated driving of a road vehicle (1) having an infotainment system (2) which comprises one or more infotainment display units (3) arranged in a passenger compartment (4) thereof, and a semi-automated driver assist system (5) comprising one or more sensors (6) for acquiring data of a road ahead;
**characterized in that** it comprises:
a control unit (12) arranged to determine, from at least the acquired data of the road ahead, a confidence of the ability of the semi-automated driver assist system (5) to control the road vehicle (1) autonomously;
a driver monitoring camera (7) for determining a viewing direction of a driver of the road vehicle (1);
the control unit (12) further being arranged to allow autonomous control of the road vehicle (1) by the semi-automated driver assist system (5) if the viewing direction of the driver of the road vehicle (1) is determined to be towards an infotainment display unit (3) of the infotainment system (2) of the road vehicle (1) and the confidence of the ability of the semi-automated driver assist system (5) to control the road vehicle (1) autonomously is determined to be above a confidence threshold; and
cancel the ongoing autonomous control by the semi-automated driver assist system (5) and urge the driver of the road vehicle (1) to assume control of the road vehicle (1) if,
during ongoing autonomous control by the semi-automated driver assist system (5), the viewing direction of the driver of the road vehicle (1) is determined not to be towards an infotainment display unit (3) of the infotainment system (2) of the road vehicle (1) and
not to be towards the road ahead or the confidence of the ability of the semi-automated driver assist system (5) to control the road vehicle (1) autonomously is determined to be below a confidence threshold.

9. An arrangement (11) according to claim 8, **wherein** the control unit (12) further is arranged to discontinue or fade-out any ongoing presentation on the infotainment display unit (3) of the infotainment system (2) of the road vehicle (1) viewed by the driver upon urging the driver of the road vehicle (1) to assume control of the road vehicle (1).

10. An arrangement (11) according to any one of claim 8 or 9, **wherein** the control unit (12) further is arranged to cancel any ongoing autonomous control by the semi-automated driver assist system (5) and urge the driver to assume control of the road vehicle (1) if the viewing direction of the driver of the road vehicle (1) is determined to not be towards the road ahead or towards an infotainment display unit (3) of the infotainment system (2) of the road vehicle (1), but on a nomadic device or item (8).

11. An arrangement (11) according to any one of claims 8 to 10, **wherein** the control unit (12) further is arranged to determine a fault status of the semi-automated driver assist system (5), and if determined faulty discontinue or fade-out any ongoing presentation on the infotainment display unit (3) of the infotainment system (2) of the road vehicle (1) viewed by the driver and urge the driver of the road vehicle (1) to assume control of the road vehicle (1).

12. An arrangement (11) according to any one of claims 8 to 10, **wherein** the control unit (12) further is arranged to determine a delay in the driver of the road vehicle (1) assuming control of the road vehicle (1) following the driver of the road vehicle (1) being urged to assume control of the road vehicle (1), and if the determined delay exceeds a predetermined delay threshold, cause the semi-automated driver assist system (5) to go to a degraded mode and slow down the road vehicle (1) autonomously.

13. An arrangement (11) according to claim 12, **wherein** the control unit (12) further is arranged to determine the delay in the driver of the road vehicle (1) assuming control of the road vehicle (1) from a delay in the viewing direction of the driver of the road vehicle (1) being determined to be towards the road ahead following the driver of the road vehicle (1) being urged to assume control of the road vehicle (1).

14. An arrangement (11) according to any one of claims 8 to 13, **wherein** the control unit (12) further is arranged to urge the driver of the road vehicle (1) to assume control of the road vehicle (1) by at least one of: presenting a takeover request to the infotainment display unit (3) of the infotainment system (2) of the road vehicle (1) viewed by the driver; presenting a blackout screen to the infotainment display unit (3) of the infotainment system (2) of the road vehicle (1) viewed by the driver; presenting an acoustic takeover request to an acoustic presentation unit (9) of the road vehicle (1); presenting a haptic takeover request warning to a road vehicle (1) driver contact surface (10) of the road vehicle (1).

15. A road vehicle (1), **characterized in that** it comprises an arrangement (11) according to any one of claims 8 to 14.

## Patentansprüche

1. Verfahren zum Ermöglichen von sekundären Aufgaben während eines halbautomatisierten Fahrens eines Straßenfahrzeugs (1) mit einem Infotainmentsystem (2), das eine oder mehrere Infotainmentanzeigeeinheiten (3) umfasst, die in einem Fahrgastraum (4) davon angeordnet sind, und einem halbautomatisierten Fahrerassistenzsystem (5), das einen oder mehrere Sensoren (6) zum Erfassen von Daten einer vorausliegenden Straße umfasst;
**dadurch gekennzeichnet, dass** es die folgenden Schritte umfasst:
(101) Bestimmen, aus zumindest den erfassten Daten der vorausliegenden Straße, einer Konfidenz der Fähigkeit des halbautomatisierten Fahrassistenzsystems (5), das Straßenfahrzeug (1) autonom zu steuern;
(102) Bestimmen einer Blickrichtung eines Fahrers des Straßenfahrzeugs (1) unter Verwenden einer Fahrerüberwachungskamera (7);
(103) wenn bestimmt wird, dass die Blickrichtung des Fahrers des Straßenfahrzeugs (1) hin zu einer Infotainmentanzeigeeinheit (3) des Infotainmentsystems (2) des Straßenfahrzeugs (1) ist, und (104) bestimmt wird, dass die Konfidenz der Fähigkeit des halbautomatisierten Fahrassistenzsystems (5), das Straßenfahrzeug (1) autonom zu steuern, über einem Konfidenzschwellenwert liegt, (105) Ermöglichen einer autonomen Steuerung des Straßenfahrzeugs (1) durch das halbautomatisierte Fahrassistenzsystem (5);
wenn, während einer laufenden autonomen Steuerung durch das halbautomatisierte Fahrassistenzsystem (5), (103) bestimmt wird, dass die Blickrichtung des Fahrers des Straßenfahrzeugs (1) nicht hin zu einer Infotainmentanzeigeeinheit (3) des Infotainmentsystems (2) des Straßenfahrzeugs (1) und nicht hin zu der vorausliegenden Straße ist, oder (104) bestimmt wird, dass die Konfidenz der Fähigkeit des halbautomatisierten Fahrassistenzsystems (5), das Straßenfahrzeug (1) autonom zu steuern, unter einem Konfidenzschwellenwert liegt, (106) Abbrechen der laufenden autonomen Steuerung durch das halbautomatisierte Fahrassistenzsystem (5) und Auffordern des Fahrers des Straßenfahrzeugs (1), die Steuerung des Straßenfahrzeugs (1) zu übernehmen.

2. Verfahren nach Anspruch 1, **wobei** es ferner Unterbrechen oder Ausblenden jeglicher laufenden Darstellung auf der Infotainmentanzeigeeinheit (3) des Infotainmentsystems (2) des Straßenfahrzeugs (1), die durch den Fahrer betrachtet wird, bei Auffordern des Fahrers des Straßenfahrzeugs (1), die Steuerung des Straßenfahrzeugs (1) zu übernehmen, umfasst.

3. Verfahren nach Anspruch 1 oder 2, **wobei,** wenn bestimmt wird, dass die Blickrichtung des Fahrers des Straßenfahrzeugs (1) nicht hin zu der vorausliegenden Straße oder hin zu einer Infotainmentanzeigeeinheit (3) des Infotainmentsystems (2) des Straßenfahrzeugs (1), sondern auf eine mobile Vorrichtung oder einen mobilen Gegenstand (8) ist, dann Abbrechen jeglicher laufenden autonomen Steuerung durch das halbautomatisierte Fahrerassistenzsystem (5) und Auffordern des Fahrers, die Steuerung des Straßenfahrzeugs (1) zu übernehmen.

4. Verfahren nach einem der Ansprüche 1 bis 3, **wobei** es ferner Bestimmen eines Fehlerzustands des halbautomatisierten Fahrerassistenzsystems (5), und wenn bestimmt wird, dass es fehlerhaft ist, Unterbrechen oder Ausblenden jeglicher laufenden Darstellung auf der Infotainmentanzeigeeinheit (3) des Infotainmentsystems (2) des Straßenfahrzeugs (1), die durch den Fahrer betrachtet wird, und Auffordern des Fahrers des Straßenfahrzeugs (1), die Steuerung des Straßenfahrzeugs (1) zu übernehmen, umfasst.

5. Verfahren nach einem der Ansprüche 1 bis 4, **wobei** es ferner Bestimmen einer Verzögerung bei der Übernahme der Steuerung des Straßenfahrzeugs (1) durch den Fahrer des Straßenfahrzeugs (1), nachdem der Fahrer des Straßenfahrzeugs (1) aufgefordert wurde, die Steuerung des Straßenfahrzeugs (1) zu übernehmen, und, wenn die bestimmte Verzögerung einen vorbestimmten Verzögerungsschwellenwert überschreitet, Veranlassen des halbautomatisierten Fahrassistenzsystems (5), sich in einen herabgesetzten Modus zu versetzen und das Straßenfahrzeug (1) autonom zu verlangsamen, umfasst.

6. Verfahren nach Anspruch 5, **wobei** die Verzögerung bei der Übernahme der Steuerung des Straßenfahrzeugs (1) durch den Fahrer des Straßenfahrzeugs (1) aus einer Verzögerung beim Bestimmen, dass die Blickrichtung des Fahrers des Straßenfahrzeugs (1) hin zu der vorausliegenden Straße ist, nachdem der Fahrer des Straßenfahrzeugs (1) aufgefordert wurde, die Steuerung des Straßenfahrzeugs (1) zu übernehmen, bestimmt wird.

7. Verfahren nach einem der Ansprüche 1 bis 6, **wobei** das Auffordern des Fahrers des Straßenfahrzeugs (1), die Steuerung des Straßenfahrzeugs (1) zu übernehmen, mindestens eines von Folgendem umfasst: Darstellen einer Übernahmeanforderung auf der Infotainmentanzeigeeinheit (3) des Infotainmentsystems (2) des Straßenfahrzeugs (1), die durch den Fahrer betrachtet wird; Darstellen eines schwarzen Bildschirms auf der Infotainmentanzeigeeinheit (3) des Infotainmentsystems (2) des Straßenfahrzeugs (1), die durch den Fahrer betrachtet wird; Darstellen einer akustischen Übernahmeanforderung auf einer akustischen Darstellungseinheit (9) des Straßenfahrzeugs (1); Darstellen einer haptischen Übernahmeanforderungswarnung an einer Straßenfahrzeug(1)-Fahrer-Kontaktfläche (10) des Straßenfahrzeugs (1).

8. Anordnung (11) zum Ermöglichen von sekundären Aufgaben während eines halbautomatisierten Fahrens eines Straßenfahrzeugs (1) mit einem Infotainmentsystem (2), das eine oder mehrere Infotainmentanzeigeeinheiten (3) umfasst, die in einem Fahrgastraum (4) davon angeordnet sind, und einem halbautomatisierten Fahrerassistenzsystem (5), das einen oder mehrere Sensoren (6) zum Erfassen von Daten einer vorausliegenden Straße umfasst;
**dadurch gekennzeichnet, dass** sie Folgendes umfasst:
eine Steuereinheit (12), die dazu angeordnet ist, aus zumindest den erfassten Daten der vorausliegenden Straße, eine Konfidenz der Fähigkeit des halbautomatisierten Fahrassistenzsystems (5), das Straßenfahrzeug (1) autonom zu steuern, zu bestimmen;
eine Fahrerüberwachungskamera (7) zum Bestimmen einer Blickrichtung eines Fahrers des Straßenfahrzeugs (1);
wobei die Steuereinheit (12) ferner dazu angeordnet ist, eine autonome Steuerung des Straßenfahrzeugs (1) durch das halbautomatisierte Fahrassistenzsystem (5) zu ermöglichen, wenn bestimmt wird, dass die Blickrichtung des Fahrers des Straßenfahrzeugs (1) hin zu einer Infotainmentanzeigeeinheit (3) des Infotainmentsystems (2) des Straßenfahrzeugs (1) ist, und bestimmt wird, dass die Konfidenz der Fähigkeit des halbautomatisierten Fahrassistenzsystems (5), das Straßenfahrzeug (1) autonom zu steuern, über einem Konfidenzschwellenwert liegt; und
die laufende autonome Steuerung durch das halbautomatisierte Fahrerassistenzsystem (5) abzubrechen und den Fahrer des Straßenfahrzeugs (1) aufzufordern, die Steuerung des Straßenfahrzeugs (1) zu übernehmen, wenn, während einer laufenden autonomen Steuerung durch das halbautomatisierte Fahrassistenzsystem (5), bestimmt wird, dass die Blickrichtung des Fahrers des Straßenfahrzeugs (1) nicht hin zu einer Infotainmentanzeigeeinheit (3) des Infotainmentsystems (2) des Straßenfahrzeug (1) und nicht hin zu der vorausliegenden Straße ist, oder bestimmt wird, dass die Konfidenz der Fähigkeit des halbautomatisierten Fahrerassistenzsystems (5), das Straßenfahrzeug (1) autonom zu steuern, unter einem Konfidenzschwellenwert liegt.

9. Anordnung (11) nach Anspruch 8, **wobei** die Steuereinheit (12) ferner dazu angeordnet ist, jegliche laufende Darstellung auf der Infotainmentanzeigeeinheit (3) des Infotainmentsystems (2) des Straßenfahrzeugs (1), die durch den Fahrer betrachtet wird, bei Auffordern des Fahrers des Straßenfahrzeugs (1), die Steuerung des Straßenfahrzeugs (1) zu übernehmen, zu unterbrechen oder auszublenden.

10. Anordnung (11) nach einem der Ansprüche 8 oder 9, **wobei** die Steuereinheit (12) ferner dazu angeordnet ist, jegliche laufende autonome Steuerung durch das halbautomatisierte Fahrassistenzsystem (5) abzubrechen und den Fahrer aufzufordern, die Steuerung des Straßenfahrzeugs (1) zu übernehmen, wenn bestimmt wird, dass die Blickrichtung des Fahrers des Straßenfahrzeugs (1) nicht hin zu der vorausliegenden Straße oder hin zu einer Infotainmentanzeigeeinheit (3) des Infotainmentsystems (2) des Straßenfahrzeugs (1), sondern auf eine mobile Vorrichtung oder einen mobilen Gegenstand (8) ist.

11. Anordnung (11) nach einem der Ansprüche 8 bis 10, **wobei** die Steuereinheit (12) ferner dazu angeordnet ist, einen Fehlerzustand des halbautomatisierten Fahrerassistenzsystems (5) zu bestimmen und, wenn bestimmt wird, dass es fehlerhaft ist, jegliche laufende Darstellung auf der Infotainmentanzeigeeinheit (3) des Infotainmentsystems (2) des Straßenfahrzeugs (1), die durch den Fahrer betrachtet wird, zu unterbrechen oder auszublenden und den Fahrer des Straßenfahrzeugs (1) aufzufordern, die Steuerung des Straßenfahrzeugs (1) zu übernehmen.

12. Anordnung (11) nach einem der Ansprüche 8 bis 10, **wobei** die Steuereinheit (12) ferner dazu angeordnet ist, eine Verzögerung bei der Übernahme der Steuerung des Straßenfahrzeugs (1) durch den Fahrer des Straßenfahrzeugs (1), nachdem der Fahrer des Straßenfahrzeugs (1) aufgefordert wurde, die Steuerung des Straßenfahrzeugs (1) zu übernehmen, zu bestimmen und, wenn die bestimmte Verzögerung einen vorbestimmten Verzögerungsschwellenwert überschreitet, das halbautomatisierte Fahrassistenzsystem (5) zu veranlassen, sich in einen herabgesetzten Modus zu versetzen und das Straßenfahrzeug (1) autonom zu verlangsamen.

13. Anordnung (11) nach Anspruch 12, **wobei** die Steuereinheit (12) ferner dazu angeordnet ist, die Verzögerung bei der Übernahme der Steuerung des Straßenfahrzeugs (1) durch den Fahrer des Straßenfahrzeugs (1) aus einer Verzögerung beim Bestimmen, dass die Blickrichtung des Fahrers des Straßenfahrzeugs (1) hin zu der vorausliegenden Straße ist, nachdem der Fahrer des Straßenfahrzeugs (1) aufgefordert wurde, die Steuerung des Straßenfahrzeugs (1) zu übernehmen, zu bestimmen.

14. Anordnung (11) nach einem der Ansprüche 8 bis 13, **wobei** die Steuereinheit (12) ferner dazu angeordnet ist, den Fahrer des Straßenfahrzeugs (1) durch mindestens eines von Folgendem aufzufordern, die Steuerung des Straßenfahrzeugs (1) zu übernehmen: Darstellen einer Übernahmeanforderung auf der Infotainmentanzeigeeinheit (3) des Infotainmentsystems (2) des Straßenfahrzeugs (1), die durch den Fahrer betrachtet wird; Darstellen eines schwarzen Bildschirms auf der Infotainmentanzeigeeinheit (3) des Infotainmentsystems (2) des Straßenfahrzeugs (1), die durch den Fahrer betrachtet wird; Darstellen einer akustischen Übernahmeanforderung auf einer akustischen Darstellungseinheit (9) des Straßenfahrzeugs (1); Darstellen einer haptischen Übernahmeanforderungswarnung an einer Straßenfahrzeug(1)-Fahrer-Kontaktfläche (10) des Straßenfahrzeugs (1).

15. Straßenfahrzeug (1), das **dadurch gekennzeichnet ist, dass** es eine Anordnung (11) nach einem der Ansprüche 8 bis 14 umfasst.

## Revendications

1. Procédé permettant des tâches secondaires pendant une conduite semi-automatisée d'un véhicule routier (1) pourvu d'un système d'infodivertissement (2) qui comprend une ou plusieurs unités d'affichage d'infodivertissement (3) agencées dans son habitable (4) et d'un système d'aide à la conduite semi-automatisée (5) comprenant un ou plusieurs capteurs (6) destinés à acquérir des données sur une route en avant ;
le procédé étant **caractérisé en ce qu'**il comprend les étapes suivantes :
(101) détermination, à partir au moins des données acquises sur la route en avant, d'une confiance en l'aptitude du système d'aide à la conduite semi-automatisée (5) à commander le véhicule routier (1) de manière autonome ;
(102) détermination d'une direction du regard d'un conducteur du véhicule routier (1) au moyen d'une caméra de surveillance de conducteur (7) ;
(103) s'il est déterminé que la direction du regard du conducteur du véhicule routier (1) est vers une unité d'affichage d'infodivertissement (3) du système d'infodivertissement (2) du véhicule routier (1) et (104) s'il est déterminé que la confiance en l'aptitude du système d'aide à la conduite semi-automatisée (5) à commander le véhicule routier (1) de manière autonome est au-dessus d'un seuil de confiance, (105) permission d'une commande autonome du véhicule routier (1) par le système d'aide à la conduite semi-automatisée (5) ;
si, pendant une commande autonome en cours par le système d'aide à la conduite semi-automatisée (5), (103) il est déterminé que la direction du regard du conducteur du véhicule routier (1) n'est pas vers une unité d'affichage d'infodivertissement (3) du système d'infodivertissement (2) du véhicule routier (1) et n'est pas vers la route en avant ou (104) s'il est déterminé que la confiance en l'aptitude du système d'aide à la conduite semi-automatisée (5) à commander le véhicule routier (1) de manière autonome est en deçà d'un seuil de confiance, (106) annulation de la commande autonome en cours par le système d'aide à la conduite semi-automatisée (5) et incitation faite au conducteur du véhicule routier (1) à prendre le contrôle du véhicule routier (1).

2. Procédé selon la revendication 1, comprenant en outre l'interruption ou l'estompage de toute présentation en cours sur l'unité d'affichage d'infodivertissement (3) du système d'infodivertissement (2) du véhicule routier (1) regardée par le conducteur lors de l'incitation faite au conducteur du véhicule routier (1) à prendre le contrôle du véhicule routier (1).

3. Procédé selon la revendication 1 ou 2, **dans lequel,** s'il est déterminé que la direction du regard du conducteur du véhicule routier (1) n'est pas vers la route en avant ou vers une unité d'affichage d'infodivertissement (3) du système d'infodivertissement (2) du véhicule routier (1) mais sur un dispositif ou élément nomade (8), alors annulation de toute commande autonome en cours par le système d'aide à la conduite semi-automatisée (5) et incitation faite au conducteur à prendre le contrôle du véhicule routier (1).

4. Procédé selon l'une quelconque des revendications 1 à 3, comprenant en outre la détermination d'un état de défaut du système d'aide à la conduite semi-automatisée (5) et, s'il est déterminé qu'il est défectueux, l'interruption ou l'estompage de toute présentation en cours sur l'unité d'affichage d'infodivertissement (3) du système d'infodivertissement (2) du véhicule routier (1) regardée par le conducteur et incitation faite au conducteur du véhicule routier (1) à prendre le contrôle du véhicule routier (1).

5. Procédé selon l'une quelconque des revendications 1 à 4, comprenant en outre la détermination d'un temps de retard dans la prise de contrôle du véhicule routier (1) par le conducteur du véhicule routier (1) suite à l'incitation faite au conducteur du véhicule routier (1) à prendre le contrôle du véhicule routier (1) et, si le temps de retard déterminé dépasse un seuil de temps de retard prédéterminé, commande au système d'aide à la conduite semi-automatisée (5) d'adopter un mode dégradé et de ralentir le véhicule routier (1) de manière autonome.

6. Procédé selon la revendication 5, **dans lequel** le temps de retard dans la prise de contrôle du véhicule routier (1) par le conducteur du véhicule routier (1) est déterminé à partir d'un temps de retard dans la détermination de la direction du regard du conducteur du véhicule routier (1) vers la route en avant suite à l'incitation faite au conducteur du véhicule routier (1) à prendre le contrôle du véhicule routier (1).

7. Procédé selon l'une quelconque des revendications 1 à 6, **dans lequel** l'incitation faite au conducteur du véhicule routier (1) à prendre le contrôle du véhicule routier (1) comprend : la présentation d'une demande de prise de contrôle sur l'unité d'affichage d'infodivertissement (3) du système d'infodivertissement (2) du véhicule routier (1) regardée par le conducteur et/ou la présentation d'un écran noir sur l'unité d'affichage d'infodivertissement (3) du système d'infodivertissement (2) du véhicule routier (1) regardée par le conducteur et/ou la présentation d'une demande de prise de contrôle sonore sur une unité de présentation sonore (9) du véhicule routier (1) et/ou la présentation d'un avertissement de demande de prise de contrôle haptique sur une surface de contact (10), avec le conducteur du véhicule routier (1), du véhicule routier (1) .

8. Agencement (11) permettant des tâches secondaires pendant une conduite semi-automatisée d'un véhicule routier (1) pourvu d'un système d'infodivertissement (2) qui comprend une ou plusieurs unités d'affichage d'infodivertissement (3) agencées dans son habitable (4) et d'un système d'aide à la conduite semi-automatisée (5) comprenant un ou plusieurs capteurs (6) destinés à acquérir des données sur une route en avant ;
l'agencement étant **caractérisé en ce qu'**il comprend :
une unité de commande (12) agencée pour déterminer, à partir au moins des données acquises sur la route en avant, d'une confiance en l'aptitude du système d'aide à la conduite semi-automatisée (5) à commander le véhicule routier (1) de manière autonome ;
une caméra de surveillance de conducteur (7) destinée à déterminer une direction du regard d'un conducteur du véhicule routier (1) ;
l'unité de commande (12) étant agencée en outre pour permettre une commande autonome du véhicule routier (1) par le système d'aide à la conduite semi-automatisée (5) s'il est déterminé que la direction du regard du conducteur du véhicule routier (1) est vers une unité d'affichage d'infodivertissement (3) du système d'infodivertissement (2) du véhicule routier (1) et s'il est déterminé que la confiance en l'aptitude du système d'aide à la conduite semi-automatisée (5) à commander le véhicule routier (1) de manière autonome est au-dessus d'un seuil de confiance ; et
annuler la commande autonome en cours par le système d'aide à la conduite semi-automatisée (5) et inciter le conducteur du véhicule routier (1) à prendre le contrôle du véhicule routier (1) si, pendant une commande autonome en cours par le système d'aide à la conduite semi-automatisée (5), il est déterminé que la direction du regard du conducteur du véhicule routier (1) n'est pas vers une unité d'affichage d'infodivertissement (3) du système d'infodivertissement (2) du véhicule routier (1) et n'est pas vers la route en avant ou s'il est déterminé que la confiance en l'aptitude du système d'aide à la conduite semi-automatisée (5) à commander le véhicule routier (1) de manière autonome est en deçà d'un seuil de confiance.

9. Agencement (11) selon la revendication 8, **dans lequel** l'unité de commande (12) est agencée en outre pour interrompre ou estomper toute présentation en cours sur l'unité d'affichage d'infodivertissement (3) du système d'infodivertissement (2) du véhicule routier (1) regardée par le conducteur lors de l'incitation faite au conducteur du véhicule routier (1) à prendre le contrôle du véhicule routier (1).

10. Agencement (11) selon la revendication 8 ou 9, **dans lequel** l'unité de commande (12) est agencée en outre pour annuler toute commande autonome en cours par le système d'aide à la conduite semi-automatisée (5) et inciter le conducteur à prendre le contrôle du véhicule routier (1) s'il est déterminé que la direction du regard du conducteur du véhicule routier (1) n'est pas vers la route en avant ou vers une unité d'affichage d'infodivertissement (3) du système d'infodivertissement (2) du véhicule routier (1) mais sur un dispositif ou élément nomade (8).

11. Agencement (11) selon l'une quelconque des revendications 8 à 10, **dans lequel** l'unité de commande (12) est agencée en outre pour déterminer un état de défaut du système d'aide à la conduite semi-automatisée (5) et, s'il est déterminé qu'il est défectueux, interrompre ou estomper toute présentation en cours sur l'unité d'affichage d'infodivertissement (3) du système d'infodivertissement (2) du véhicule routier (1) regardée par le conducteur et inciter le conducteur du véhicule routier (1) à prendre le contrôle du véhicule routier (1) .

12. Agencement (11) selon l'une quelconque des revendications 8 à 10, **dans lequel** l'unité de commande (12) est agencée en outre pour déterminer un temps de retard dans la prise de contrôle du véhicule routier (1) par le conducteur du véhicule routier (1) suite à l'incitation faite au conducteur du véhicule routier (1) à prendre le contrôle du véhicule routier (1) et, si le temps de retard déterminé dépasse un seuil de temps de retard prédéterminé, commander au système d'aide à la conduite semi-automatisée (5) d'adopter un mode dégradé et de ralentir le véhicule routier (1) de manière autonome.

13. Agencement (11) selon la revendication 12, **dans lequel** l'unité de commande (12) est agencée en outre pour déterminer le temps de retard dans la prise de contrôle du véhicule routier (1) par le conducteur du véhicule routier (1) à partir d'un temps de retard dans la détermination de la direction du regard du conducteur du véhicule routier (1) vers la route en avant suite à l'incitation faite au conducteur du véhicule routier (1) à prendre le contrôle du véhicule routier (1).

14. Agencement (11) selon l'une quelconque des revendications 8 à 13, **dans lequel** l'unité de commande (12) est agencée en outre pour inciter le conducteur du véhicule routier (1) à prendre le contrôle du véhicule routier (1) en : présentant une demande de prise de contrôle sur l'unité d'affichage d'infodivertissement (3) du système d'infodivertissement (2) du véhicule routier (1) regardée par le conducteur et/ou présentant un écran noir sur l'unité d'affichage d'infodivertissement (3) du système d'infodivertissement (2) du véhicule routier (1) regardée par le conducteur et/ou présentant une demande de prise de contrôle sonore sur une unité de présentation sonore (9) du véhicule routier (1) et/ou présentant un avertissement de demande de prise de contrôle haptique sur une surface de contact (10), avec le conducteur du véhicule routier (1), du véhicule routier (1).

15. Véhicule routier (1), **caractérisé en ce qu'**il comprend un agencement (11) selon l'une quelconque des revendications 8 à 14.
